# EUROPEAN PATENT APPLICATION

(11) **EP 2 713 260 A1**
(43) Date of publication of application: **02.04.2014**
(21) Application number: 13182298.3
(22) Date of filing: 29.08.2013
(51) Int. Cl.: G06F 3/0488, G06F 3/0481

(54) **Electronic device and operating method**

(30) Priority: 28.09.2012 KR 20120108799
(71) Applicant: Samsung Electronics Co., Ltd, Gyeonggi-do 443-742 (KR)
(72) Inventor: Kim, Kwang-Ho, Gyeonggi-do (KR); Park, Tae-Gun, Gyeonggi-do (KR)
(74) Representative: Jenkins, Richard Gavin

(57) **Abstract**

A method and an electronic device run an application. The method for running an application in an electronic device includes displaying one application icon of one or more applications contained in a folder, in an icon of the folder, detecting a gesture to the folder icon, and running or changing the application displayed in the folder icon according to the gesture to the folder icon.

## Description

### TECHNICAL FIELD

The present disclosure relates generally to an electronic device. More particularly, although not exclusively, the present disclosure relates to a method and an apparatus for running an application in an electronic device.

### BACKGROUND

As use of electronic devices rapidly grows, electronic device providers competitively develop electronic devices for providing a variety of handy and additional functions to secure more users. In recent, diverse applications with various functions for the sake of the users' convenience and leisure time are released. Naturally, the electronic device contains several or tens of applications therein.

When the electronic device contains tens of applications, it is not easy for the user to search for his/her intended application. In this regard, a conventional electronic device manages the applications on a folder basis so as to ease the user's access to the application. For example, the electronic device creates a game folder and a life folder under user control, adds icons indicating a plurality of game applications to the game folder, and adds icons indicating scheduler, morning call, and traffic guide applications relating to the user's daily life to the life folder so that the user can access the corresponding application through the folder more easily.

That is, when the applications are listed on the folder basis in the electronic device, the user can perceive the folder including a particular application in advance, select the corresponding folder, reselect the particular application to launch in the selected folder, and thus run the particular application. However, such a process should be repeated every time the user runs the particular application.

Accordingly, what is needed is a method for running the application in the folder without the cumbersome process in the electronic device.

### SUMMARY

It is an aim of certain embodiments of the invention to solve, mitigate or obviate, at least partly, at least one of the problems and/or disadvantages associated with the prior art. Certain embodiments aim to provide at least one of the advantages described below.

It will be appreciated from the following description that, in certain embodiments of the invention, features concerning the graphic design of user interfaces are combined with interaction steps or means to achieve a technical effect.

Certain embodiments aim to achieve the technical effect of lowering a burden (e.g. a cognitive, operative, operational, operating, or manipulative burden) of a user when performing certain device interactions (i.e. interactions with the device).

Certain embodiments aim to achieve the technical effect of providing a more efficient man-machine (user-machine) interface.

To address the above-discussed deficiencies of the prior art, it is an aim of certain embodiments of the present invention to provide a method and an apparatus for running an application in a folder without opening the folder in an electronic device.

An aim of certain embodiments is to provide a method and an apparatus for displaying an icon of one of a plurality of applications contained in a folder, in or on a folder icon in an electronic device.

An aim of certain embodiments is to provide a method and an apparatus for changing an application displayed in or on a folder icon in an electronic device.

An aim of certain embodiments is to provide a method and an apparatus for displaying an icon of one of a plurality of applications contained in a folder, in or on a folder icon, and then immediately running the displayed application in the electronic device when a gesture to the folder is detected.

Certain embodiments aim to provide a method and an apparatus for arranging applications of a folder based on their priority in an electronic device.

According to one aspect of the present invention, a method for controlling an electronic device includes displaying one application icon of (i.e. corresponding to) one or more applications contained in a folder, in (or within, or within a boundary of, or inside, or on, or superimposed on, or overlaid on) an icon of the folder; detecting a gesture to the folder icon; and running or changing the application displayed in the folder icon according to the gesture to the folder icon.

According to another aspect of the present invention there is provided a method for controlling an electronic device, the method comprising: displaying an application icon in or on (or within, or within a boundary of, or inside, or superimposed on, or overlaid on) an icon corresponding to (representing) a folder, wherein the displayed application icon corresponds to (represents) an application or one of a plurality of applications contained in, included in, stored in, allocated to, or associated with said folder; detecting a user input to the electronic device; and running (executing) the application corresponding to the displayed application icon, or changing the displayed application icon to a different application icon corresponding to a different one of said plurality of applications, according to the user input.

In certain embodiments the user input is a gesture to the folder icon, for example a touch input to a touch screen displaying the folder icon, the touch input comprising touching a portion of the screen corresponding to the location/position of the folder icon on the screen. In other words, in certain embodiments the user input may comprise, or be perceived by the user as comprising, touching the displayed folder icon. The operation of the device in response to detecting a touch input to the displayed icon may depend on the type of touch input detected, for example whether the touch input is a single tap (e.g. on the folder icon), a double tap (e.g. on the folder icon), a sweep across the folder icon starting an ending at positions outside the folder icon, a sweep starting on the folder icon and ending at a position outside the folder icon, a sweep starting outside the folder icon and ending in the folder icon, or a drag input. For touch inputs comprising a sweep or drag, the operation performed by the device in response may, in certain embodiments, depend on the direction of the sweep or drag. In certain embodiments, the device is adapted to detect, and recognize, a plurality of predetermined or pre-set inputs, each having a respective operation or action associated with it. In certain embodiments, a sweep, swipe, or drag across the folder icon in a first direction (e.g. vertical direction) results in a change of the displayed application icon in/on the folder icon. For example, a sweep up may be arranged to result in a change to display an application icon (in or on the folder icon) corresponding to an application of higher priority or ranking from the folder. A sweep down may be arranged to result in a change to display an application icon corresponding to an application of lower priority.

Another aspect of the invention provides a method for operating an electronic device, the method comprising: displaying an application icon, of one or more applications included in a folder, in or on an icon of the folder; detecting a user input (e.g. a gesture to the icon of the folder); and running an application associated with the application icon or changing the application icon displayed in or on the icon of the folder according to the user input.

In certain embodiments, displaying the application icon in or on the icon of the folder comprises: prioritizing the one or more applications included in the folder based on at least one of an application execution time, an application usage frequency, an application name, or a user setting; and displaying an application icon of a highest priority, among the one or more applications, in the icon of the folder.

In certain embodiments, the method further comprises determining, setting, or allocating a respective priority to each of a plurality of applications contained in, included in, stored in, allocated to, or associated with said folder, and the displaying of an application icon in or on the folder icon may comprise displaying the application icon corresponding to the application with the highest priority. Priority may be determined by a variety of factors, including, but not limited to: a length of time for which the application has been run/executed, for example over a predetermined preceding period; a frequency of usage of the application or a number of times the application has been executed over a certain period; a name of the application; metadata of the application; and a user setting.

In certain embodiments the user input (e.g. gesture) comprises at least one of a tap, a double tap, a drag, or a tap over a certain time (e.g. a tap which maintains contact with a touch screen for a time greater than a predetermined threshold).

In certain embodiments, detecting the user input (e.g. detecting the gesture to the icon of the folder) comprises: determining whether the user input (e.g. gesture) is to change the application icon displayed in or on the icon of the folder; and in response to determining that the user input is to change the application icon displayed in or on the icon of the folder, changing and displaying the changed application icon in or on the icon of the folder (i.e. displaying a different application icon in or on the folder icon).

In certain embodiments, determining whether the user input (e.g. gesture) is to change the application icon displayed in or on the icon of the folder comprises: determining whether the input detected on the icon of the folder is a drag; in response to determining that the detected input is the drag, comparing a direction of the detected drag with a page switch direction of the electronic device; and in response to determining that the detected drag direction and the page switch direction of the electronic device cross (e.g. in response to determining that the drag direction is substantially transverse, perpendicular, or not parallel to a page switch direction), determining that the input is to change the application icon displayed in or on the icon of the folder. In certain embodiments, if the drag is in a vertical direction it may be interpreted as an input to change the displayed application icon in or on the folder icon.

In certain embodiments, the method comprises, in response to determining that the detected drag direction and the page switch direction of the electronic device do not cross, determining that the input is a page switch input. In other words, if the drag or sweep direction is determined to substantially correspond to a direction predetermined for a page switch input, then the drag input will result in a page switch rather than a change of the displayed application icon in or on the folder icon. For example, if the drag or sweep direction is substantially horizontal, it may be interpreted as an input to switch the displayed page from one page to another.

In certain embodiments, the changing and displaying of the application icon displayed in or on the folder icon comprises: changing the application icon displayed in the folder icon with another application icon based on at least one of the detected drag direction and a priority of the one or more applications included in the folder.

Another aspect of the invention provides a method for controlling an electronic device, the method comprising: displaying an application icon which was most recently executed (i.e. which corresponds to an application which was most recently executed), among one or more applications included in a folder, in or on an icon of the folder; detecting a double tap on the icon of the folder; and running an application associated with the application icon displayed in or on the icon of the folder in response to the double tap on the icon of the folder.

Another aspect of the invention provides a method for controlling an electronic device, the method comprising: prioritizing one or more applications contained in a folder based on at least one of an application execution time, an application usage frequency, an application name, or user setting; and displaying an application icon of a highest priority, among the one or more applications, in or on an icon of the folder.

In certain embodiments, the method further comprises: detecting a user input (e.g. a gesture to the icon of the folder); and running an application associated with the application icon or changing the application icon displayed in or on the icon of the folder according to the user input (e.g. the gesture on the folder icon).

Another aspect of the invention provides an electronic device comprising: one or more processors; a touch screen; and a memory configured to store program code of one or more programs, wherein one or more of the one or more processors are configured to execute the program code to: cause the touch screen to display an application icon of one or more applications included in a folder in or on an icon of the folder, detect a user input (e.g. a gesture to the icon of the folder), and run an application associated with the application icon or cause the touch screen to change the application icon displayed in or on the icon of the folder according to the user input (e.g. gesture to the icon of the folder).

In certain embodiments, one or more of the one or more processors are configured to execute the program code to: prioritize the one or more applications included in the folder based on at least one of an application execution time, an application usage frequency, an application name, or a user setting, and cause the touch screen to display an application icon of a highest priority, among the one or more applications, in or on the icon of the folder.

Certain embodiments provide apparatus arranged to implement a method in accordance with any of the above-described aspects or embodiments.

Another aspect provides an electronic device comprising: one or more processors; a touch screen; and a memory configured to store program code of one or more programs, wherein one or more of the one or more processors are configured to execute the program code to: cause the touch screen to display an application icon which was most recently executed, among one or more applications included in a folder, in or on an icon of the folder, detect a double tap on the icon of the folder, and run an application associated with the application icon displayed in or on the icon of the folder in response to the double tap on the icon of the folder.

Another aspect provides an electronic device comprising: one or more processors; a touch screen; and a memory configured to store program code of one or more programs wherein one or more of the one or more processors are configured to execute the program code to: prioritize one or more applications contained in a folder based on at least one of an application execution time, an application usage frequency, an application name, or a user setting, and cause the touchscreen to display an application icon of a highest priority, among the one or more applications, in or on the icon of the folder.

According to another aspect of the present disclosure, an electronic device includes one or more processors; a touch screen; a memory; and one or more programs stored in the memory and configured for execution by the one or more processors. The program includes instructions for displaying one application icon of one or more applications contained in a folder, in an icon of the folder, detecting a gesture to the folder icon, and running or changing the application displayed in the folder icon according to the gesture to the folder icon.

Another aspect of the invention provides a computer program comprising instructions arranged, when executed, to implement a method and/or apparatus in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses exemplary embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1A illustrates an electronic device according to an exemplary embodiment of the present disclosure;

FIG. 1B illustrates a processor in the electronic device according to an exemplary embodiment of the present disclosure;

FIG. 2A illustrates a method for running an application of a folder in the electronic device according to an exemplary embodiment of the present disclosure;

FIG. 2B illustrates means for running the application of the folder in the electronic device according to an exemplary embodiment of the present disclosure;

FIG. 3 illustrates a method for running the application by detecting a touch on the folder in the electronic device according to an exemplary embodiment of the present disclosure;

FIG. 4 illustrates an application icon displayed on a folder icon in the electronic device according to an exemplary embodiment of the present disclosure;

FIG. 5 illustrates application execution in the folder by opening the folder in the electronic device according to an exemplary embodiment of the present disclosure;

FIG. 6 illustrates application execution in the folder without opening the folder in the electronic device according to an exemplary embodiment of the present disclosure;

FIG. 7 illustrates icon change of the application displayed on the folder icon in the electronic device according to an exemplary embodiment of the present disclosure; and

FIG. 8 illustrates icon change of the application displayed on the folder icon in the electronic device according to other exemplary embodiment of the present disclosure.

Throughout the drawings, like reference numerals will be understood to refer to like parts, components and structures.

### DETAILED DESCRIPTION

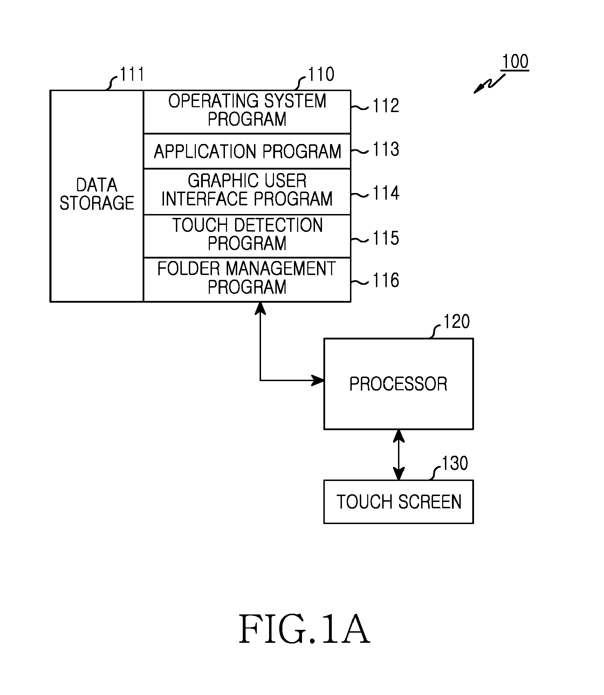

FIGURES 1A through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. The following description with reference to the accompanying drawings is provided to assist in a comprehensive understanding of exemplary embodiments of the disclosure as defined by the claims and their equivalents. The present disclosure includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Hereinafter, an electronic device embraces a mobile communication terminal, a smart phone, a tablet Personal Computer (PC), a digital camera, an MP3 player, a navigation system, a laptop, a netbook, a computer, a television, a refrigerator, and an air conditioner, which allow touch input.

FIG. 1A illustrates a block diagram of an electronic device according to an exemplary embodiment of the present disclosure.

Referring to FIG. 1A, the electronic device 100 includes a memory 110, a processor 120, and a touch screen 130. A plurality of memories 110 and a plurality of processors 120 can be used.

The memory 110 includes a data storage 111, an operating system program 112, an application program 113, a graphic user interface program 114, a touch detection program 115, and a folder management program 116. The program being a software component can be represented as a set of instructions, and thus the program can be referred to as an instruction set. Also, the program may be referred to as a module.

The memory 110 can store one or more programs including instructions according to an exemplary embodiment of the present disclosure.

The data storage 111 stores data generating in the function execution corresponding to the program stored in the memory 110. The data storage 111 can store information of an application displayed on a folder icon. The data storage 111 can store priorities of applications of the folder, on the folder basis. In so doing, the priority of the application can be determined according to when the application is run, how frequently the application is run, an application name, and user setting. For example, the application executed most recently can be given the highest priority, the application executed most frequently over a certain time duration can be given the highest priority, the application name can be prioritized in alphabetical order, and the application can be prioritized based on the user's direct setting.

The operating system program 112 (the embedded operating system such as WINDOWS, LINUX, Darwin, RTXC, UNIX, OS X, or VxWorks) includes various software components for controlling general system operations. These include, e.g., memory management and control, storage hardware (device) control and management, and power control and management. The operating system program 112 processes normal communication between various hardware (devices) and software components (programs).

The application program 113 includes applications for a browser, an e-mail, a message, a word processing, an address book, a widget, Digital Right Management (DRM), voice recognition, voice reproduction, a position determining function, a location based service, and a phone.

The graphic user interface program 114 includes at least one software component for providing a user interface using graphics between the user and the electronic device 100. That is, the graphic user interface program 114 includes at least one software component for displaying user interface information on the touch screen 130. The graphic user interface program 114 includes an instruction for displaying one application icon of one or more applications of the folder, on the folder icon. For example, the graphic user interface program 114 can display the icon of the phone application of a system folder, in a system folder icon. When the touch detection program 115 detects the touch to open the folder, the graphic user interface program 114 can open the folder of the detected touch and display the applications of the folder.

The touch detection program 115 detects the touch input on a touch-sensitive surface in association with the touch screen 130. That is, the touch detection program 115 determines the contact (touch) on the touch-sensitive surface, movement of the contact, a movement direction and a movement time of the contact, and abortion (cessation) of the contact (i.e. release, end of the touch). Herein, the movement of the contact determined can include a speed (magnitude), a velocity (magnitude and direction) and/or an acceleration (including magnitude and/or direction) of the contact. The touch detection program 115 can sense the touch on the folder. In so doing, the detected touch includes at least one of tap, double tap, and drag in a certain direction. When the applications in the folder are displayed, the touch detection program 115 can detect the touch on the displayed applications. When the applications in the folder are displayed, the touch detection program 115 can detect the touch on a folder name over a certain time.

The folder management program 116 includes an instruction for opening the folder and/or running the application in the folder according to the touch detected by the touch detection program 115. That is, when the tap on the folder is detected, the folder management program 116 can open the corresponding folder and display the applications in the folder. For example, when the tap on the system folder is detected, the folder management program 116 can display the phone, address book, and text message applications in the system folder. Next, when the phone application is tapped among the applications of the system folder, the folder management program 116 can run the phone application. Thus, a single tap on the folder icon may open the folder, resulting in the display of a plurality of application icons corresponding to (i.e. representing) a plurality of applications in, or otherwise associated with, the folder. A further tap or touch on one of the displayed application icons may then be used to open, execute, or run the corresponding application.

When the folder is double-tapped, the folder management program 116 can run the application displayed in the corresponding folder icon. For example, when the phone application icon is displayed in the system folder icon and the system folder is double-tapped, the folder management program 116 can run the phone application. Herein, the application icon displayed in the folder icon can be of the highest priority among the applications of the folder. Thus, conveniently, by making the appropriate predetermined input (e.g. double tap) an application stored in the folder, namely the application corresponding to the application icon displayed in or on the folder icon, may be opened, run, or executed without first opening the folder, thereby reducing the number of user inputs required, speeding up access to that application, and so providing an improved user-apparatus interface.

The folder management program 116 in certain embodiments prioritizes the applications based on at least one of when the application is run, how frequently the application is run, the application name, and the user setting. In so doing, the priority can be updated on the periodic basis or in real time when the application is executed, when the application name is changed, or when the user setting is detected. In so doing, when the folder is touched to open the folder, the folder management program 116 can display the applications of the folder based on the determined priority.

When the folder is dragged, the folder management program 116 can determine whether to change the application icon displayed in the corresponding folder icon by considering a page switch direction and a drag direction. That is, when the page switch direction and the drag direction cross at right angles, the folder management program 116 changes the application icon displayed in the corresponding folder icon. When the page switch direction and the drag direction are identical, the folder management program 116 does not change the application icon displayed in the corresponding folder icon and switches the page according to the detected drag.

In other words, when the folder is dragged in the direction vertical to the page switch direction, the folder management program 116 can change and display the application icon displayed in the corresponding folder icon. For example, when the page is switched horizontally and the folder is dragged upwards, the folder management program 116 can determine other application of the higher priority than the application icon displayed in the corresponding folder icon, and then change the application icon displayed in the folder icon with the other application icon. For example, when the page is switched horizontally and the folder is dragged downwards, the folder management program 116 can determine other application of the lower priority than the application icon displayed in the corresponding folder icon, and then change the application icon displayed in the folder icon with the other application icon determined. When the folder is touched to open it, at least one application of the folder is displayed, and the folder name is tapped over a certain time, the folder management program 116 can display a menu for changing the priority of the applications of the folder so as to change the priority of the applications of the folder under the user control.

The processor 120 can include at least one processor and a peripheral interface, which are not shown. The processor 120 executes a particular program (instruction set) stored in the memory 110 and performs a plurality of functions corresponding to the program.

The touch screen 130 is a touch-sensitive display and provides an interface for the touch input/output between the electronic device 100 and the user. The touch screen 130 is a medium for detecting the touch (or the contact) through a touch sensor (not shown), sending the detected touch input to the electronic device 100, and providing a visual output of the electronic device 100 to the user. That is, in response to the touch input, the touch screen 130 provides the visual output to the user based on text, graphics, and video.

The touch screen 130 includes the touch-sensitive surface for detecting the user's touch input, and senses the user touch input using haptic contact, tactile contact, or their combination. For example, the detected touch point of the touch screen 130 corresponds to a digit of a finger used to contact the touch-sensitive surface. On the touch-sensitive surface, the touch screen 130 detects the contact of an external device such as stylus pen. The detected contact is converted to an interaction corresponding to the user interface (e.g., a soft key) displayed on the touch screen 130.

The touch screen 130 provides an interface for the touch input/output between the electronic device 100 and the user. Namely, the touch screen 130 is a medium for sending the user's touch input to the electronic device 100 and representing the visual output of the electronic device 100 to the user. The touch screen 130 can adopt various display technologies such as Liquid Crystal Display (LCD), Light Emitting Diode (LED), Light emitting Polymer Display (LPD), Organic LED (OLED), Active Matrix OLED (AMOLED) or Flexible LED (FLED). The touch screen 130 is not limited to a touch screen using those display technologies. The touch screen 130 can detect the contact start, the contact movement, or the contact abortion or end on the touch-sensitive surface using, but not limited to, various touch detection (sensing) techniques such as capacitive, resistive, infrared or surface sound wave detections. The touch screen 130 can display one application icon of the applications of the folder, in the folder. Further, the touch screen 130 can detect the touch on the folder. In so doing, the touch includes at least one of the tap, the double tap, and the drag.

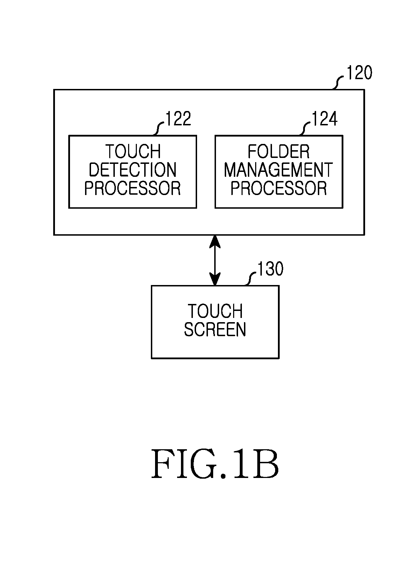

FIG. 1B illustrates a block diagram of the processor in the electronic device according to an exemplary embodiment of the present disclosure.

Referring to FIG. 1B, the processor 120 of the electronic device 100 includes a touch detection processor 122 and a folder management processor 124.

The touch detection processor 122 detects the touch input on the touch-sensitive surface in association with the touch screen 130. That is, the touch detection processor 122 determines the contact (touch), the movement of the contact, the movement direction and the movement time of the contact, and the abortion of the contact on the touch-sensitive surface. Herein, the movement of the contact determined can include the speed (magnitude) of the contact, the velocity (magnitude and direction) and/or the acceleration (magnitude and/or direction). The touch detection processor 122 can sense the touch on the folder. In so doing, the detected touch includes at least one of the tap, the double tap, and the drag in a certain direction. When the applications in the folder are displayed, the touch detection processor 122 can detect the touch on the displayed applications. When the applications in the folder are displayed, the touch detection processor 122 can detect the touch on the folder name over a certain time.

The folder management processor 124 includes an instruction for opening the folder and/or running the application in the folder according to the touch detected by the touch detection processor 122. That is, when the folder is tapped, the folder management processor 124 can open the corresponding folder and display the applications in the folder. For example, when the tap on the system folder is detected, the folder management processor 124 can display the phone, address book, and text message applications in the system folder. Next, when the phone application is tapped among the applications of the system folder, the folder management processor 124 can run the phone application.

When the folder is double-tapped, the folder management processor 124 can run the application displayed in the corresponding folder icon. For example, when the phone application icon is displayed in the system folder icon and the system folder is double-tapped, the folder management processor 124 can run the phone application. Herein, the application icon displayed in the folder icon can be of the highest priority among the applications of the folder.

The folder management processor 124 prioritizes the applications based on at least one of the application execution time, the application execution frequency, the application name, and the user setting in the folder. In so doing, the priority can be updated on the periodic basis or in real time when the application is executed, when the application name is changed, or when the user setting is detected. In so doing, when the folder is touched to open the folder, the folder management processor 124 can display the applications of the folder based on the determined priority.

When the folder is dragged, the folder management processor 124 can determine whether to change the application icon displayed in the corresponding folder icon by considering the page switch direction and the drag direction. That is, when the page switch direction and the drag direction cross at right angles, the folder management processor 124 changes the application icon displayed in the corresponding folder icon. When the page switch direction and the drag direction are identical, the folder management processor 124 does not change the application icon displayed in the corresponding folder icon and switches the page according to the detected drag.

In other words, when the folder is dragged in the direction vertical to the page switch direction, the folder management processor 124 can change and display the application icon displayed in the corresponding folder icon. For example, when the page is switched horizontally and the folder is dragged upwards, the folder management processor 124 can determine other application of the higher priority than the application icon displayed in the corresponding folder icon, and then change the application icon displayed in the folder icon with the other application icon determined. For example, when the page is switched horizontally and the folder is dragged downwards, the folder management processor 124 can determine other application of the lower priority than the application icon displayed in the corresponding folder icon, and then change the application icon displayed in the folder icon with the other application icon determined. When the folder is touched to open it, at least one application of the folder is displayed, and the folder name is tapped over certain time, the folder management processor 124 can display the menu for changing the priority of the applications of the folder so as to change the priority of the applications contained the folder under the user control.

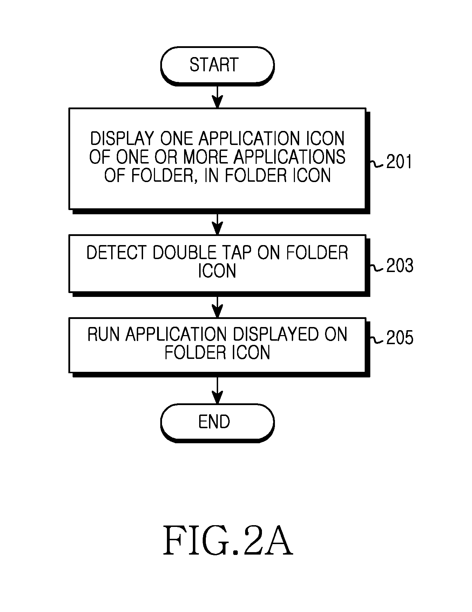

FIG. 2A illustrates a method for running the application of the folder in the electronic device 100 according to an exemplary embodiment of the present disclosure.

Referring now to FIG. 2A, the electronic device 100 displays one application icon of the one or more applications of the folder, in the folder icon in step 201. More specifically, the electronic device 100 can display the application icon of the highest priority among the one or more applications of the folder, in the folder icon. In so doing, the priority of the application can be determined according to at least one of the execution time, the execution frequency, and the name of the application, or the user setting.

Next, the electronic device 100 detects the gesture to the folder icon in step 203 and runs the application displayed on the folder icon in step 205. The gesture includes at least one of the tap, the multi-tap, the drag, and the tap over a certain time duration. For example, when the system folder contains the phone, address book, and text message applications, the electronic device 100 can display the phone application icon in the system folder icon according to the priority of the application. When the system folder is double-tapped, the electronic device 100 can immediately run the phone application without having to open the system folder.

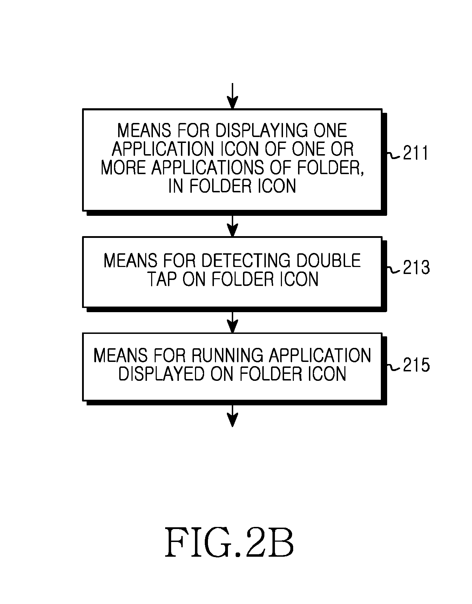

FIG. 2B illustrates a means for running the application without opening the folder in the electronic device according to an exemplary embodiment of the present disclosure.

Referring to FIG. 2B, the electronic device 100 includes a means 211 for displaying one application icon of the one or more applications of the folder, in the folder icon. Also, the electronic device 100 includes a means 213 for detecting the gesture on the folder icon and a means 215 for running the application displayed on the folder icon. The gesture includes at least one of the tap, the double tap, the drag, and the tap over a certain time duration. Accordingly, the electronic device 100 can include the means for detecting such a gesture.

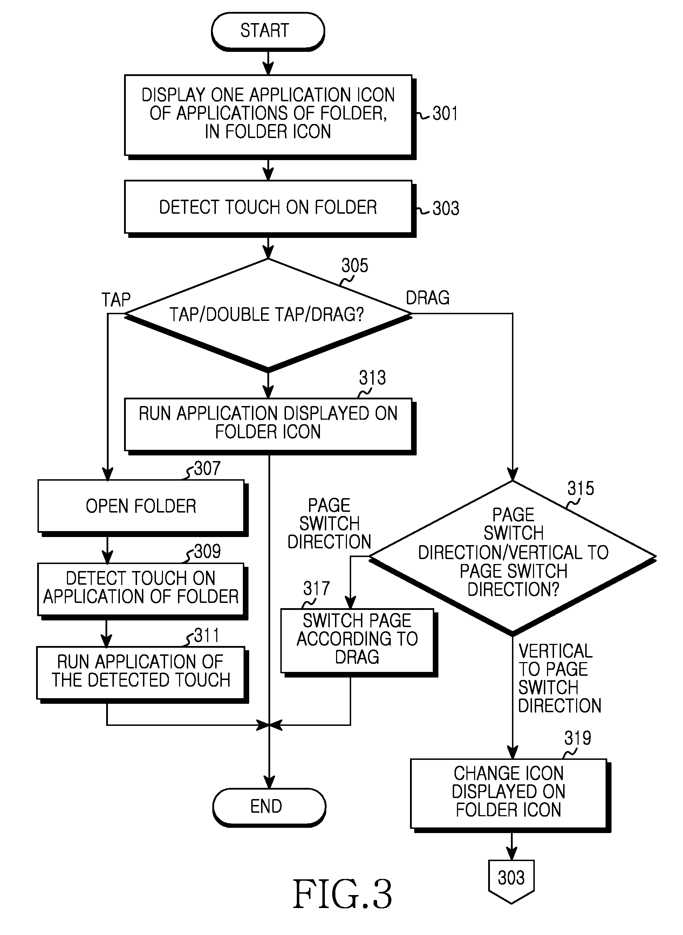

FIG. 3 illustrates a method for detecting the touch on the folder in the electronic device 100 according to an exemplary embodiment of the present disclosure.

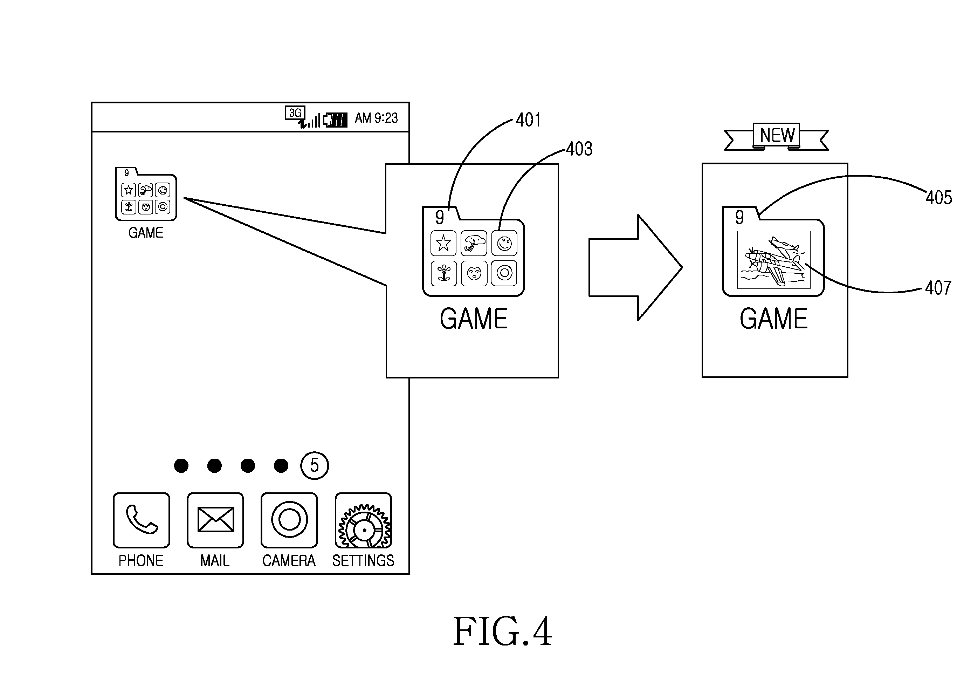

Referring to FIG. 3, the electronic device 100 displays one application icon of the applications of the folder, in the folder icon in step 301. For example, a general folder of FIG. 4 displays a plurality of applications icons 403 of applications of the folder, on the folder icon 401. A folder according to an exemplary embodiment of the present disclosure displays one application icon 407 of the applications of the folder, in the folder icon 405.

Next, the electronic device 100 detects the touch on the folder in step 303, and determines whether the detected touch is the tap, the double tap, or the drag in step 305.

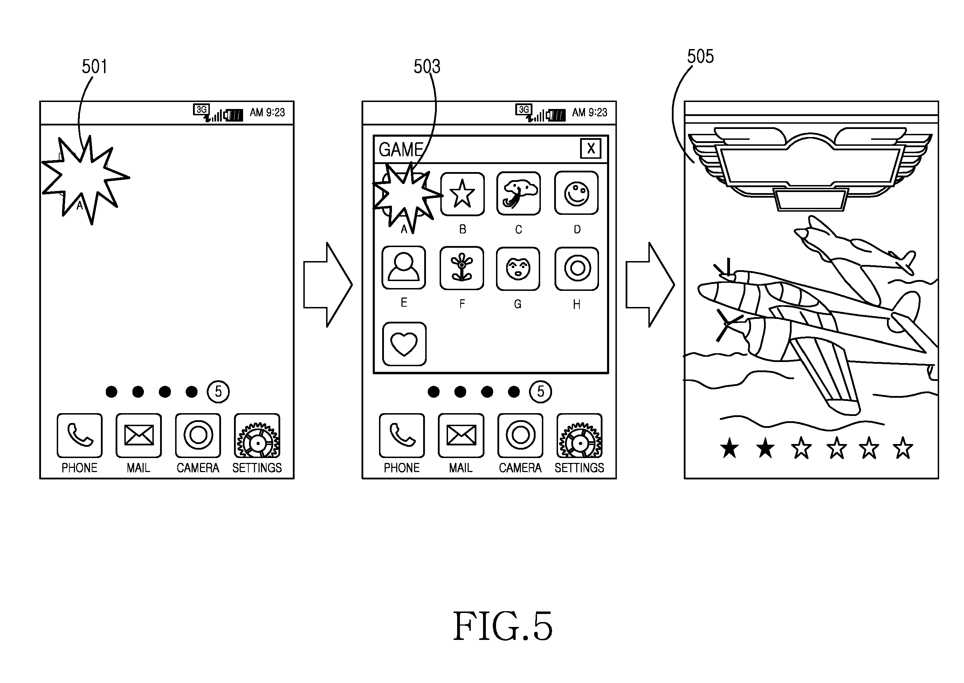

When the detected touch is the tap in step 305, the electronic device 100 opens the folder and displays the applications of the folder in step 307, and detects the touch on the application of the folder in step 309. The electronic device 100 runs the application of the detected touch in step 311 and then finishes this process. For example, when a game folder 501 is tapped as shown in FIG. 5, the electronic device 100 displays a plurality of applications in the game folder. Next, the electronic device 100 runs the application 503 of the detected touch among the displayed applications in step 505.

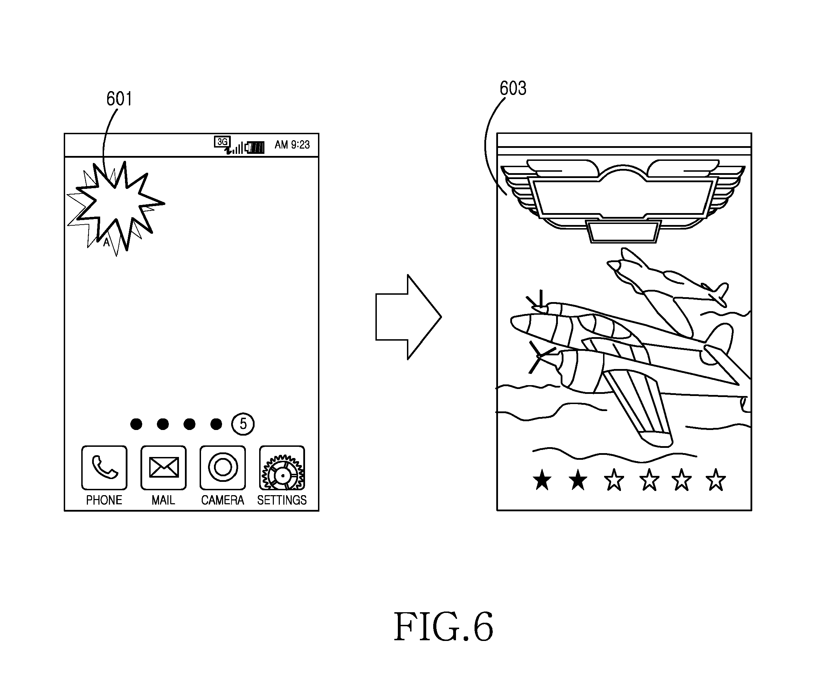

When the detected touch is the double tap in step 305, the electronic device 100 runs the application displayed on the folder icon in step 313 and then finishes this process. For example, when one application icon is displayed on the game folder icon and the game folder icon is double-tapped in step 601 as shown in FIG. 6, the electronic device 100 immediately runs the application displayed on the game folder icon in step 603 as shown in FIG. 6. Next, the electronic device 100 finishes this process.

When the detected touch is the drag in step 305, the electronic device 100 determines whether the detected drag advances in the page switch direction or in the vertical direction of the page switch direction in step 315.

When the detected drag advances in the page switch direction, the electronic device 100 switches the page according to the drag in step 317 and then finishes this process. For example, when the page is switched horizontally and the drag to the left is detected, the electronic device 100 can switch the corresponding page to a next page. The present disclosure is not limited to the horizontal page switch but is applicable to the horizontal page scroll.

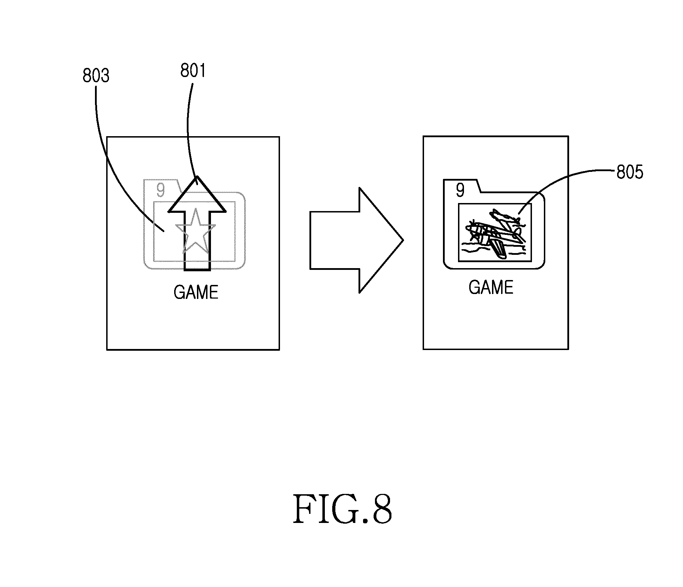

By contrast, when the detected drag advances in the vertical direction of the page switch direction, the electronic device 100 changes the displayed application icon on the folder icon in step 319 and returns to step 303. When the page is switched or scrolled vertically and the horizontal touch is detected, the electronic device 100 can change the displayed application icon on the folder icon. For example, when the page is switched or scrolled vertically and the drag to the right is detected, the electronic device 100 can change the displayed application icon on the folder icon with the application icon of the lower priority than the current application displayed on the folder icon. For example, when the page is switched or scrolled vertically and the upward drag is detected as shown in FIG. 8, the electronic device 100 can change the displayed application icon on the folder icon with the application icon of the higher priority than the current application displayed on the folder icon.

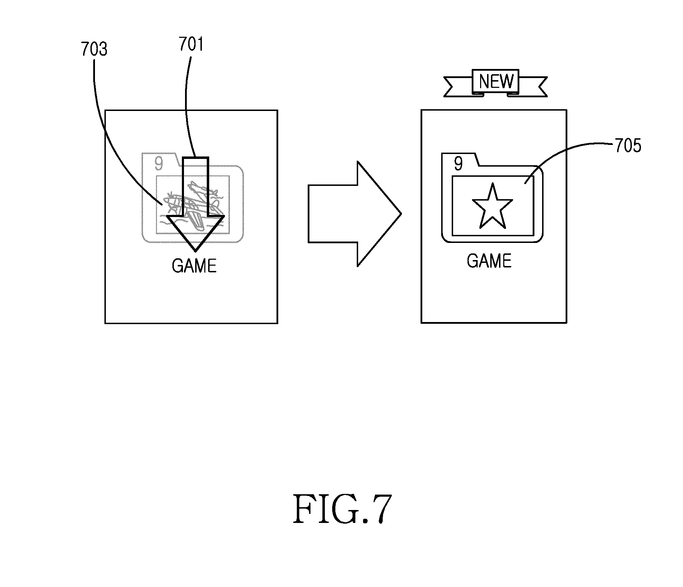

By contrast, when the page is switched or scrolled horizontally and the vertical touch is detected, the electronic device 100 can change the displayed application icon on the folder icon. For example, when the page is switched or scrolled horizontally and the downward drag 701 is detected as shown in FIG. 7, the electronic device 100 can change the displayed application icon 703 on the folder icon with the application icon 705 of the lower priority than the current application displayed on the folder icon. For example, when the page is switched or scrolled horizontally and the upward drag 801 is detected as shown in FIG. 8, the electronic device 100 can change the displayed application icon 803 on the folder icon with the application icon 805 of the higher priority than the current application displayed on the folder icon

The exemplary embodiments and various functional operations of the present disclosure described herein can be implemented in computer software, firmware, hardware, or in combinations of one or more of them including the structures disclosed in this specification and their structural equivalents. The exemplary embodiments of the present disclosure can be implemented as one or more computer program products, that is, one or more data processors, or one or more modules of computer program instructions encoded on a computer-readable medium to control the devices.

The computer-readable medium may be a machine-readable storage medium, a machine-readable storage substrate, a memory device, a material affecting a machine-readable propagated stream, or a combination of one or more of these. The term 'data processor' encompasses every device, apparatus, and machine including, for example, a programmable processor, a computer, a multiple processors, or a computer, for processing data. The device can be added to the hardware and include a program code for creating an execution environment of a corresponding computer program, for example, a code for constituting processor firmware, a protocol stack, a database management system, an operating system, or a combination of one or more of these.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the disclosure has been shown and described with reference to certain exemplary embodiments thereof, it will be understood by those skilled in the art that various changes in form and details may be made therein without departing from the spirit and scope of the disclosure as defined by the appended claims and their equivalents.

## Claims

1. A method of operating an electronic device, the method comprising:
displaying an application icon in or on an icon of a folder, wherein the displayed application icon corresponds to an application or one of a plurality of applications included in said folder;
detecting a user input to the electronic device; and
running the application corresponding to the displayed application icon, or changing the displayed application icon to a different application icon corresponding to a different one of said plurality of applications, according to the user input.

2. A method for operating an electronic device, the method comprising:
displaying an application icon of one or more applications included in a folder in or on an icon of the folder;
detecting a gesture to the icon of the folder; and
running an application associated with the application icon or changing the application icon displayed in the icon of the folder according to the gesture to the icon of the folder.

3. The method of claim 1 or claim 2, wherein displaying the application icon comprises:
prioritizing the one or more applications included in the folder based on at least one of an application execution time, an application usage frequency, an application name, or a user setting; and
displaying an application icon of a highest priority, among the one or more applications, in or on the icon of the folder.

4. The method of any preceding claim, wherein the user input or gesture comprises at least one of a tap, a double tap, a drag, or a tap over a certain time.

5. The method of any preceding claim, wherein detecting the user input or gesture to the icon of the folder comprises:
determining whether the input or gesture is to change the application icon displayed in or on the icon of the folder; and
in response to determining that the input or gesture is to change the application icon displayed in the icon of the folder, changing and displaying the changed application icon in or on the icon of the folder.

6. The method of claim 5, wherein determining whether the input or gesture is to change the application icon displayed in or on the icon of the folder comprises:
determining whether the input or gesture detected on the icon of the folder is a drag;
in response to determining that the detected input or gesture is the drag, comparing a direction of the detected drag with a page switch direction of the electronic device; and
in response to determining that the detected drag direction and the page switch direction of the electronic device cross, determining that the input or gesture is to change the application icon displayed in or on the icon of the folder.

7. The method of claims 6, wherein the changing and displaying of the application icon displayed in or on the folder icon comprises:
changing the application icon displayed in or on the folder icon with another application icon based on at least one of the detected drag direction and a priority of the one or more applications included in the folder.

8. A method for controlling an electronic device, the method comprising:
displaying an application icon which was most recently executed, among one or more applications included in a folder, in or on an icon of the folder;
detecting a double tap on the icon of the folder; and
running an application associated with the application icon displayed in or on the icon of the folder in response to the double tap on the icon of the folder.

9. A method for controlling an electronic device, the method comprising:
prioritizing one or more applications contained in a folder based on at least one of an application execution time, an application usage frequency, an application name, or user setting; and
displaying an application icon of a highest priority, among the one or more applications, in or on an icon of the folder.

10. The method of claim 9, further comprising:
detecting a gesture to the icon of the folder; and
running an application associated with the application icon or changing the application icon displayed in or on the icon of the folder according to the gesture on the folder icon.

11. An electronic device comprising:
one or more processors;
a touch screen; and
a memory configured to store program code of one or more programs, wherein one or more of the one or more processors are configured to execute the program code to:
cause the touch screen to display an application icon of one or more applications included in a folder in or on an icon of the folder,
detecting a gesture to the icon of the folder, and
running an application associated with the application icon or causing the touch screen to change the application icon displayed in or on the icon of the folder according to the gesture to the icon of the folder.

12. The electronic device of claim 11, wherein one or more of the one or more processors are configured to execute the program code to:
prioritize the one or more applications included in the folder based on at least one of an application execution time, an application usage frequency, an application name, or a user setting, and
cause the touch screen to display an application icon of a highest priority, among the one or more applications, in or on the icon of the folder.

13. The apparatus of claim 11, wherein the apparatus is arranged to implement a method in accordance with any one of claims 4 to 8.

14. An electronic device comprising:
one or more processors;
a touch screen; and
a memory configured to stored program code of one or more programs, wherein one or more of the one or more processors are configured to execute the program code to:
cause the touch screen to display an application icon which was most recently executed, among one or more applications included in a folder, in or on an icon of the folder,
detect a double tap on the icon of the folder, and
run an application associated with the application icon displayed in or on the icon of the folder in response to the double tap on the icon of the folder.

15. An electronic device comprising:
one or more processors;
a touch screen; and
a memory configured to store program code of one or more programs wherein one or more of the one or more processors are configured to execute the program code to:
prioritize one or more applications contained in a folder based on at least one of an application execution time, an application usage frequency, an application name, or a user setting, and
cause the touchscreen to display an application icon of a highest priority, among the one or more applications, in or on the icon of the folder.
